# EUROPÄISCHE PATENTSCHRIFT

(11) **EP 1 145 904 B1**
(45) Veröffentlichungstag und Bekanntmachung des Hinweises auf die Patenterteilung: **20.02.2008**
(21) Anmeldenummer: 01108345.8
(22) Anmeldetag: 03.04.2001
(51) Int. Cl.: B60Q 1/26, B60Q 11/00

(54) **Ansteuervorrichtung für eine mit einer Anzahl von Leuchtioden versehene Leuchte eines Kraftfahrzeuges**
Control device for vehicle light with several LED's
Dispositif de commande pour feux de véhicule comprenant plusieurs Leds

(30) Priorität: 11.04.2000 DE 10017878
(43) Veröffentlichungstag der Anmeldung: 17.10.2001
(73) Patentinhaber: Hella KGaA Hueck & Co., 59552 Lippstadt (DE)
(72) Erfinder: Bode, Hans-Alfred, 33619 Bielefeld (DE)

(56) Entgegenhaltungen:
- EP-A- 1 079 667
- DE-A1- 19 814 745
- DE-C1- 19 708 659
- US-A- 5 598 068

## Beschreibung

Die vorliegende Erfindung betrifft eine Ansteuerungsvorrichtung für eine mit einer Anzahl von Leuchtdioden versehene Leuchte eines Kraftfahrzeuges gemäß dem Oberbegriff des Anspruchs 1.

Eine Ansteuerungsvorrichtung der vorgenannten Art ist aus der DE 197 08 659 C1 bekannt. Die darin beschriebene Ansteuerungsvorrichtung für ein Blinklicht eines Kraftfahrzeugs weist zwei Paare von zueinander parallelen Reihen von Leuchtdioden auf. Jedem der zwei Paare dieser Reihen ist ein Transistor zugeordnet, der mit dem jeweiligen Paar in Reihe geschaltet ist. In jeder der Reihen ist ein Kontrollwiderstand mit den Leuchtdioden in Reihe geschaltet. Jedem Paar von Reihen ist eine Kontrollstufe zugeordnet, die in jeder der beiden Reihen des Paars von Reihen den Spannungsabfall über den Kontrollwiderstand misst. Wenn in einer der Reihen eine der Leuchtdioden ausfällt und dabei hochohmig wird, wird dieser Ausfall von der Kontrollstufe durch den geänderten Spannungsabfall am Kontrollwiderstand detektiert. Die Kontrollstufe steuert daraufhin den Transistor, der dem von dieser Kontrollstufe überwachten Paar von Reihen zugeordnet ist, derart an, dass sämtliche Leuchtdioden dieses Paars von Reihen stromlos werden. Damit wird eine Hälfte der Leuchtdioden des Blinklichts von der Ansteuerschaltung ausgeschaltet. Die andere Hälfte der Leuchtdioden kann trotz des Ausfalls der ausgeschalteten Hälfte weiter in Betrieb genommen werden, so dass unter Umständen bei einer dadurch erzielten zu schwachen Leuchtwirkung Verkehrsgefährdungen auftreten können.

Aus der nicht vorveröffentlichten, prioritätsälteren EP 1 079 667 A2 ist eine Ansteuervorrichtung für Flugzeug-Sitz-Leuchten bekannt. Die Ansteuervorrichtung umfasst eine Mehrzahl von parallelen Reihen von Leuchtdioden, wobei zu jeder dieser Reihen ein Transistor in Reihe geschaltet ist. Weiterhin wird in jeder dieser Reihen der Strom von einer gemeinsamen Kontrolleinheit gemessen. Diese Kontrolleinheit kann die Transistoren ansteuern, um die Leuchtdioden zu dimmen oder ein- und auszuschalten. Weiterhin regelt die Kontrolleinheit bei Ausfall einer Leuchtdiode den Strom durch die anderen Reihen derart, dass insgesamt die gleiche Leuchtstärke durch sämtliche Leuchtdioden zusammen erzielt wird wie vor dem Ausfall.

Eine weitere Ansteuerungsvorrichtung ist aus dem deutschen Patent DE 196 18 010 C1 bekannt. Bei der darin beschriebenen Ansteuerungsvorrichtung ist eine Kontrollleitung vorgesehen, die bei Ausfall einer oder mehrerer der Leuchtdioden ein entsprechend detektierbares Signal an eine Kontrolleinheit weitergibt. Als nachteilig dabei erweist sich jedoch, dass bei Ausfall einer oder mehrerer der Leuchtdioden die übrigen Leuchtdioden trotzdem weiter mit Spannung versorgt werden und leuchten. Es liegt somit kein definiertes Ausfallverhalten der Ansteuerungsvorrichtung vor. Weiterhin besteht die Gefahr, dass die Leuchte, die beispielsweise als Bremsleuchte, Blinkleuchte oder Begrenzungsleuchte ausgebildet sein kann, trotz des Ausfalls einer oder mehrerer der Leuchtdioden weiter in Betrieb genommen wird, so dass unter Umständen bei einer dadurch erzielten zu schwachen Leuchtwirkung Verkehrsgefährdungen auftreten können. Weiterhin können bei der in dem vorgenannten deutschen Patent beschriebenen Ansteuerungsvorrichtung Restströme ausgeschalteter Treiber die Leuchtdioden dazu veranlassen, zu glimmen. Außerdem ist bei der aus dem Stand der Technik bekannten Ansteuerungsvorrichtung kein Verpolungsschutz vorgesehen.

Aufgabe der Erfindung ist es, die aus der DE 197 08 659 Cl bekannte Ansteuervorrichtung dahingehend zu verändern, dass diese möglichst einfach aufgebaut ist und ein eindeutiges Ausfallverhalten aufweist.

Diese Aufgabe wird durch die Merkmale des Anspruchs 1 gelöst.

Dabei wird zu jeder der Reihen von Leuchtdioden jeweils ein Transistor in Reihe geschaltet ist, wobei die Ansteuerungsvorrichtung derart gestaltet ist, dass die Transistoren während des Betriebs der Leuchte so angesteuert werden, dass bei Ausfall einer Leuchtdiode, der zu einer Unterbrechung des Stromflusses in der entsprechenden Reihe von Leuchtdioden führt, alle Leuchtdioden in jeder der Reihen außer Funktion gesetzt werden. Dadurch wird ein eindeutiges Ausfallverhalten erzielt und die Gefahr eines Betriebs der Leuchte mit einer oder mehreren defekten Leuchtdioden vermieden.

Erfindungsgemäß sind parallel zu den Reihen von Leuchtdioden mindestens ein Widerstand und mindestens eine, vorzugsweise zwei Dioden in Durchlassrichtung in Reihe geschaltet, wobei jeweils ein Abgriff zwischen dem mindestens einen Widerstand und der mindestens einen Diode mit der Basis eines jeden der Transistoren verbunden ist, um an diese eine diesen ansteuernde Referenzspannung anzulegen. Durch diese Referenzspannung, die im wesentlichen der Durchlassspannung der mindestens einen Diode bzw. der Summe der Durchlaßspannungen der Dioden entsprechen kann, werden somit die in jeder der Reihen vorgesehenen Transistoren derart angesteuert, dass sie durchschalten und die Leuchtdioden leuchten. Aufgrund der Tatsache, dass die Transistoren eine hohe Stromverstärkung erzielen können, wird die durch den mit den Dioden in Reihe geschalteten Widerstand gegebene Referenzspannungsquelle nur minimal belastet, so dass über einen weiten Spannungsbereich eine konstante Helligkeit der Leuchte erzielt wird.

Gemäß einer bevorzugten Ausführungsform der vorliegenden Erfindung sind die Transistoren Bipolartransistoren, die jeweils mit ihrem Emitter bzw. Kollektor mit einer der Leuchtdioden direkt oder indirekt verbunden und mit ihrem Kollektor bzw. Emitter über mindestens einen Widerstand mit Masse verbunden sind.

Weiterhin wird bei Ausfall einer einzelnen Diode der Stromfluß in dem entsprechenden Lastzweig, der durch die Reihe von Leuchtdioden und dem mit diesen in Reihe geschalteten Transistor gegeben ist, der Stromfluß unterbrochen. Aufgrund dieses unterbrochenen Stromflusses in dem vorgenannten Lastzweig wird die Referenzspannung, die an dem Abgriff zwischen dem Widerstand und der mindestens einen mit diesem in Reihe geschalteten Dioden anliegt, über die durch Basis und Emitter bzw. Kollektor des entsprechenden Transistors gebildete Diode vorzugsweise vergleichsweise niederohmig auf Masse gelegt. Damit steht aber den übrigen Lastzweigen, in denen sämtliche Leuchtdioden unversehrt sein können, diese Referenzspannung nicht mehr zur Ansteuerung der Basis des entsprechenden Transistors zur Verfügung. Damit erlöschen sämtliche Leuchtdioden, wobei beispielsweise der Strom durch die Leuchte von 100% auf ca. 1% zurückgeht. Ein derartiger Stromrückgang ist wesentlich leichter und eindeutiger zu detektieren als zum Beispiel die Abnahme des Stromes um beispielsweise 1/25, für den Fall, dass eine Leuchtdiode in einem von beispielsweise 25 Lastzweigen bei einer Schaltung gemäß dem Stand der Technik ausfällt.

Gemäß einer bevorzugten Ausführungsform der vorliegenden Erfindung ist vor dem Verzweigungspunkt in die einzelnen Reihen von Leuchtdioden bzw. des die Referenzspannung erzeugenden Zweiges der Ansteuerschaltung eine Diode als Verpolungsschutz in Durchlassrichtung angeordnet. Damit wird zum einen die Ansteuerungsvorrichtung gegen ein versehentliches Anschließen mit falscher Polung gesichert. Zum anderen wird durch die dadurch erzielte Hintereinanderschaltung der als Verpolungsschutz dienenden Diode sowie der für die Referenzspannung verantwortlichen Dioden bzw. des für die Referenzspannung verantwortlichen Widerstandes vermieden, dass Restströme von Halbleiterlampentreibern zum Glimmen der Leuchtdioden im ausgeschalteten Zustand führen.

Vorteilhafterweise ist zwischen jedem der Transistoren und dem mindestens einen Widerstand, über den die Emitter bzw. Kollektor mit Masse verbunden sind, jeweils ein einzelner für den jeweiligen Transistor spezifischer Widerstand angeordnet. Durch diese einem jeden der Transistoren zugeordneten Widerstände werden eventuell vorhandene Schwellenunterschiede der Transistoren ausgeglichen, ohne dass dabei die generelle Funktion der Transistoren in der Ansteuerungsvorrichtung beeinträchtigt wird.

Vorzugsweise ist der mit der mindestens einen Diode zur Erzeugung der Referenzspannung in Reihe geschaltete Widerstand wesentlich größer, vorzugsweise um einen Faktor von etwa 1000, als der Widerstand oder die Summe der Widerstände, der oder die jeden der Transistoren mit Masse verbindet oder verbinden. Auf diese Weise wird zum einen erreicht, dass als Referenzspannung im wesentlichen die Durchlassspannung der einen Diode oder die Summe der Durchlassspannungen der beiden hintereinander geschalteten Dioden in dem Referenzzweig anliegt. Zum anderen wird damit gewährleistet, dass bei Ausfall einer einzelnen Leuchtdiode diese Referenzspannung vergleichsweise niederohmig auf Masse gelegt wird, so dass sich ein eindeutiges Ausfallschaltverhalten ergibt.

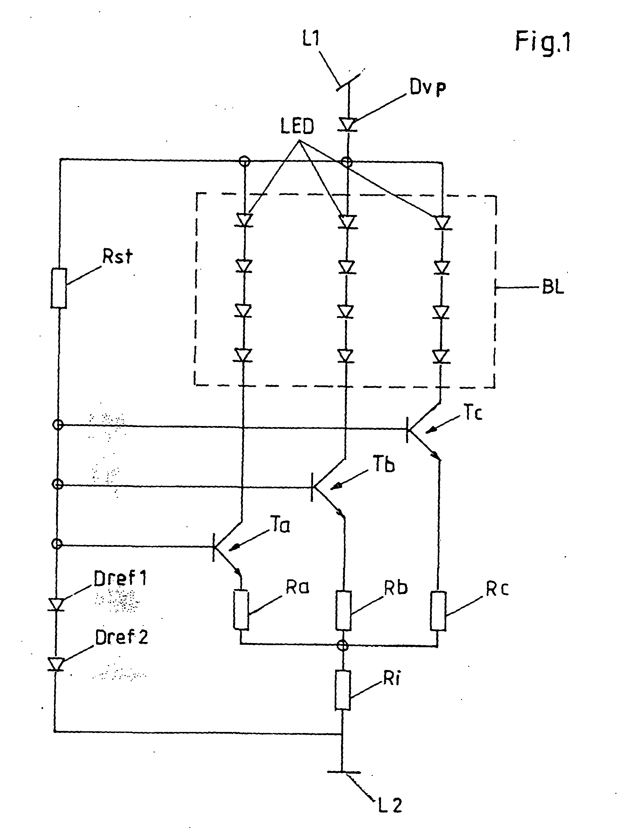

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen
- Fig. 1: schematisch einen Schaltplan einer erfindungsgemäßen Ansteuervorrichtung.

Fig. 1 lässt sich eine Zuleitung L 1 entnehmen, die beispielsweise mit einem Blinkgeberausgang verbunden ist. In die Zuleitung L 1 ist in Durchlassrichtung eine Diode Dᵥₚ eingebracht, die als Verpolungsschutz dient. Im Anschluß an die als Verpolungsschutz dienende Diode Dᵥₚ findet eine Verzweigung der Ansteuerungsvorrichtung in mehrere parallel zueinander verlaufende Zweige statt.

Aus Fig. 1 sind drei Zweige ersichtlich, die Reihen von hintereinandergeschalteten Leuchtdioden aufweisen, die mit LED bezeichnet sind. Diese Leuchtdioden können beispielsweise in einem Blinklicht BL angeordnet sein, das in Fig. 1 schematisch angedeutet ist.

Jeweils an das von der als Verpolungsschutz dienenden Diode Dᵥₚ abgewandte Ende einer jeden Reihe von Leuchtdioden ist der Kollektor eines Bipolartransistors Tₐ, T_{b}, T_{c} angeschlossen. Die jeweiligen Emitter dieser Transistoren Tₐ, T_{b}, T_{c} sind mit Widerständen Rₐ, R_{b}, R_{c} verbunden. In dem abgebildeten Ausführungsbeispiel können als Bipolartransistoren beispielsweise Transistoren vom Typ BC 337-40 und als Widerstände Rₐ, R_{b}, R_{c} Widerstände von etwa 2Ω eingesetzt werden.

Auf den von den Transistoren Tₐ, T_{b}, T_{c} abgewandten Seiten der Widerstände Rₐ, R_{b}, R_{c} sind diese miteinander und mit einem weiteren Widerstand Rᵢ verbunden, der in dem abgebildeten Ausführungsbeispiel einen Wert von 4Ω haben kann. Auf seiner gegenüberliegenden Seite ist dieser Widerstand Rᵢ mit einer Masseleitung L 2 verbunden.

Ebenfalls an der den Leuchtdioden LED zugewandten Seite der als Verpolungsschutz dienenden Diode Dᵥₚ ist ein zu den vorgenannten Reihen von Leuchtdioden paralleler Zweig der Ansteuerungsvorrichtung angeschlossen, in dem hintereinander ein Widerstand Rₛₜ und zwei Dioden D_{ref1}, D_{ref2} geschaltet sind. Das von dem Widerstand Rₛₜ abgewandte Ende der zweiten Diode D_{ref2} ist ebenfalls mit der Masseleitung L 2 verbunden.

Zwischen dem Widerstand Rₛₜ und dem zu dieser benachbarten Diode D_{ref1} sind drei Abgriffe vorgesehen, von denen jeweils einer mit einer der Basen der Transistoren Tₐ, T_{b}, T_{c} verbunden ist. Als Widerstand Rₛₜ kann beispielsweise ein Widerstand von 7,5 kΩ dienen. Als Dioden D_{ref1} beziehungsweise D_{ref2} können Dioden vom Typ 1N4448 Verwendung finden.

Die Funktion der Ansteuervorrichtung gemäß dem in Fig. 1 dargestellten Ausführungsbeispiel ist derart, dass durch den relativ hochohmigen Widerstand Rₛₜ auf der dem Widerstand Rₛₜ benachbarten Seite der ersten der Dioden D_{ref1}, und somit an den vorgenannten Abgriffen eine Referenzspannung erzeugt wird, die im wesentlichen der Summe der Durchlassspannungen der beiden Dioden D_{ref1}, D_{ref2} entspricht. Diese Referenzspannung wird auf die Basen der bipolaren Transistoren Tₐ, T_{b}, T_{c} gegeben. Diese sind so ausgelegt, dass sie bei dieser auf die Basen aufgegebenen Referenzspannung durchschalten, so dass durch sämtliche Leuchtdioden ein Strom fließt, der diese veranlasst, zu leuchten. Die in die einzelnen parallel zueinander angeordneten und mit Leuchtdioden bestückten Zweige eingebrachten Widerstände Rₐ, R_{b}, R_{c} können unterschiedlich ausgestaltet sein, um Schwellenunterschiede der Transistoren Tₐ, T_{b}, T_{c} auszugleichen. Durch einen derartigen Ausgleich von Schwellenunterschieden der Transistoren Tₐ, T_{b}, T_{c} wird die generelle Funktion der Ansteuerungsvorrichtung nicht beeinträchtigt.

Aufgrund der Tatsache, dass vermittels der verwendeten Transistoren Tₐ, T_{b}, T_{c} eine relativ große Stromverstärkung, beispielsweise eine Stromverstärkung um mehr als 250, ermöglicht wird, wird die durch den Widerstand Rₛₜ und die Dioden D_{ref1} und D_{ref2} gebildete Referenzspannungsquelle nur minimal belastet, so dass über einen weiten Spannungsbereich die Leuchtdioden mit konstanter Helligkeit leuchten. In jedem der mit den Leuchtdioden versehenen Lastzweige stellt sich dabei beispielsweise ein Strom von ca. 50 mA ein. Weiterhin werden durch die Reihenschaltung der Diode Dᵥₚ für den Verpolungsschutz, des Widerstandes Rₛₜ und der Dioden D_{ref1} und D_{ref2} eventuell vorhandene Restströme von ausgeschalteten Treibern abgefangen, so dass im ausgeschalteten Zustand die Leuchtdioden nicht aufglimmen können.

Wenn eine der Leuchtdioden, beispielsweise eine Leuchtdiode in dem mit dem Transistor Tₐ verbundenen Zweig, ausfällt, wird der Stromfluß in dem entsprechenden Lastzweig unterbrochen. Aufgrund des unterbrochenen Stromflusses in dem vorgenannten Lastzweig wird die Referenzspannung, die an dem Abgriff zwischen dem Widerstand Rₛₜ und der Diode D_{ref1} anliegt, über die durch Basis und Emitter des entsprechenden Transistors Tₐ gebildete Diode niederohmig, nämlich über einen der Widerstände Rₐ, R_{b}, R_{c}, in dem vorgenannten Beispiel über den Widerstand Rₐ, und den Widerstand Rᵢ auf Masse gelegt. Damit steht aber auch den übrigen Lastzweigen, in denen sämtliche Leuchtdioden unversehrt sind, diese Referenzspannung nicht mehr zur Ansteuerung der Basis des entsprechenden Transistors zur Verfügung. Damit erlöschen sämtliche Leuchtdioden, wobei beispielsweise der Strom durch die beispielsweise als Blinkleuchte BL ausgeführte Leuchte von 100% auf ca. 1 % zurückgeht.

## Patentansprüche

1. Ansteuerungsvorrichtung für eine mit einer Anzahl von Leuchtdioden (LED) versehene Leuchte eines Kraftfahrzeugs, die eine Blinkleuchte, eine Bremsleuchte oder eine Begrenzungsleuchte ist, wobei während des Betriebs der Leuchte an mindestens zwei parallel zueinander geschalteten mit jeweils mindestens einer Leuchtdiode (LED) versehenen Reihen von Leuchtdioden (LED) eine den Leuchtdioden (LED) und den Leuchtanforderungen entsprechende Versorgungsspannung anliegt, und wobei zumindest zwei Transistoren (Tₐ, T_{b}, T_{c}) vorgesehen sind, die zu jeweils einer der Reihen von Leuchtdioden (LED) in Reihe geschaltet sind, **dadurch gekennzeichnet, dass**
- zu jeder der Reihen von Leuchtdioden (LED) jeweils ein Transistor (Tₐ, T_{b}, T_{c}) in Reihe geschaltet ist und dass die Ansteuerungsvorrichtung derart gestaltet ist, dass die Transistoren (Tₐ, T_{b}, T_{c}) während des Betriebs der Leuchte so angesteuert werden, dass bei Ausfall einer Leuchtdiode (LED), der zu einer Unterbrechung des Stromflusses in der entsprechenden Reihe von Leuchtdioden (LED) führt, alle Leuchtdioden (LED) in jeder der Reihen außer Funktion gesetzt werden,
- **dass** parallel zu den Reihen von Leuchtdioden (LED) mindestens ein Widerstand (Rₛₜ) und mindestens eine Diode (D_{ref1}, D_{ref2}),vorzugsweise zwei Dioden (D_{ref1}, D_{ref2}), in Durchlassrichtung in Reihe geschaltet sind, wobei jeweils ein Abgriff zwischen dem mindestens einen Widerstand (Rₛₜ) und der mindestens einen Diode (D_{ref1}, D_{ref2}) mit der Basis eines jeden der Transistoren (Tₐ, T_{b}, T_{c}) verbunden ist, um an diese eine diesen ansteuernde Referenzspannung anzulegen.

2. Ansteuerungsvorrichtung nach Anspruch 1, **dadurch gekennzeichnet, dass** die Transistoren (Tₐ, T_{b}, T_{c}) Bipolartransistoren sind, die jeweils mit ihrem Emitter beziehungsweise Kollektor mit einer der Leuchtdioden (LED) direkt oder indirekt verbunden und mit ihrem Kollektor beziehungsweise Emitter über mindestens einen Widerstand (Ri) mit Masse verbunden sind.

3. Ansteuerungsvorrichtung nach Anspruch 1 oder 2, **dadurch gekennzeichnet, dass** die Referenzspannung im wesentlichen der Durchlassspannung der mindestens einen Diode (D_{ref1}, D_{ref2}) beziehungsweise der Summe der Durchlassspannungen der Dioden (D_{ref1}, D_{ref2}) entspricht.

4. Ansteuerungsvorrichtung nach einem der vorstehenden Ansprüche, **dadurch gekennzeichnet, dass** vor dem Verzweigungspunkt in die einzelnen Reihen von Leuchtdioden (LED) beziehungsweise des die Referenzspannung erzeugenden Zweiges der Ansteuerschaltung eine Diode (Dᵥₚ) als Verpolungsschutz in Durchlassrichtung angeordnet ist.

5. Ansteuerungsvorrichtung nach einem der vorstehenden Ansprüche, **dadurch gekennzeichnet, dass** zwischen jedem der Transistoren (Tₐ, T_{b}, T_{c}) und dem mindestens einen Widerstand (Rᵢ), über den die Emitter beziehungsweise Kollektoren mit Masse verbunden sind, jeweils ein einzelner für den jeweiligen Transistor (Tₐ, T_{b}, T_{c}) spezifischer Widerstand (Rₐ, R_{b}, R_{c}) angeordnet ist.

6. Ansteuerungsvorrichtung nach einem der vorstehenden Ansprüche, **dadurch gekennzeichnet, dass** der mit der mindestens einen Diode (D_{ref1}, D_{ref2}) zur Erzeugung der Referenzspannung in Reihe geschaltete Widerstand (Rₛₜ) wesentlich größer, vorzugsweise um einen Faktor von 1000 größer ist, als der Widerstand (Rᵢ) oder die Summe der Widerstände (Rₐ, R_{b}, R_{c}, Rᵢ), der oder die jeden der Transistoren (Tₐ, T_{b}, T_{c}) mit Masse verbindet oder verbinden.

## Claims

1. Apparatus for the actuation of a lamp of a motor vehicle where the lamp is equipped with a number of light emitting diodes (LED) and is either a direction indicator, a stop lamp or a sidelamp, where, during operation of the lamp, a voltage is supplied to at least two rows of light emitting diodes (LED) which are connected in parallel and contain at least one light emitting diode (LED) each, wherein the voltage supplied is adapted to the light emitting diodes (LED) and the required illumination, and where at least two transistors (Tₐ, T_{b}, T_{c}) are installed, each of which is connected in series with one of the rows of light emitting diodes (LED), **characterized in that**
- one transistor (Tₐ, T_{b}, T_{c}) is connected in series with either of the rows of light emitting diodes (LED) and that the actuation apparatus is designed such that the transistors (Tₐ, T_{b}, T_{c}), during operation of the lamp, are actuated such that, if the flow of current through a row of light emitting diodes (LED) is interrupted by the outage of one light emitting diode (LED) **in that** row, all light emitting diodes (LED) in each of the rows will be turned off;
- at least one resistor (Rₛₜ) is connected in parallel with the rows of light emitting diodes (LED) and at least one diode (D_{ref1}, D_{ref2}) or preferably two diodes (D_{ref1}, D_{ref2}) are connected in series in forward direction, where there is a tapping point between the at least one resistor (Rₛₜ) and the at least one diode (D_{ref1}, D_{ref2}) which is connected to the base of each of the transistors (Tₐ, T_{b}, T_{c}) so that a reference voltage can be supplied to the base to control the transistor.

2. Actuation apparatus of claim 1, **characterized in that** the transistors (Tₐ, T_{b}, T_{c}) are bipolar transistors whose emitter or collector directly or indirectly connects to one of the light emitting diodes (LED) and whose collector or emitter connects to at least one resistor (Rᵢ) which connects it with the frame ground.

3. Actuation apparatus of claim 1 or 2, **characterized in that** the reference voltage is very much equivalent to the forward voltage of the at least one diode (D_{ref1}, D_{ref2}) or the total of forward voltages of the diodes (D_{ref1}, D_{ref2}).

4. Actuation apparatus of one of the above claims, **characterized in that** a diode (Dᵥₚ) providing polarity reversal protection resides in forward direction before the point at which the circuit branches into the different rows of light emitting diodes (LED) or before the starting point of the control circuit branch generating the reference voltage.

5. Actuation apparatus of one of the above claims, **characterized in that** a resistor (Rₐ, R_{b}, R_{c}) specifically adapted to each of the transistors (Tₐ, T_{b}, T_{c}) resides between each of the transistors (Tₐ, T_{b}, T_{c}) and the at least one resistor (R₁) connecting the emitters or collectors with the frame ground.

6. Actuation apparatus of one of the above claims, **characterized in that** the resistor (Rₛₜ) connected in series with the at least one diode (D_{ref1}, D_{ref2}) to generate the reference voltage provides a substantially larger, preferably a thousand times larger, resistance than the resistor (R₁) or the total of resistances (Rₐ, R_{b}, R_{c}, R₁) connecting each of the transistors (Tₐ, T_{b}, T_{c}) with the frame ground.

## Revendications

1. Dispositif de pilotage concernant un feu d'un véhicule automobile doté d'un certain nombre de diodes électroluminescentes (LED), feu qui est un clignotant, un feu de stop ou un feu de position, où, au cours du fonctionnement du feu, une tension d'alimentation correspondant aux diodes électroluminescentes (LED) et aux exigences du feu s'applique sur au moins deux rangées de diodes électroluminescentes (LED) montées en étant parallèles entre elles et comprenant à chaque fois au moins une diode électroluminescente (LED), et où il est prévu au moins deux transistors (Ta, Tb, Tc) qui sont à chaque fois montés en série par rapport à l'une des rangées de diodes électroluminescentes (LED),
**caractérisé**
- **en ce qu'**un transistor (Ta, Tb, Tc) est à chaque fois monté en série par rapport à chacune des rangées de diodes électroluminescentes (LED), et en ce que le dispositif de pilotage est conçu de manière telle, que les transistors (Ta, Tb, Tc) soient pilotés au cours du fonctionnement du feu, de façon telle, qu'en cas de panne d'une diode électroluminescente (LED), qui entraîne une interruption du flux de courant dans la rangée correspondante de diodes électroluminescentes (LED), toutes les diodes électroluminescentes (LED) de chacune des rangées soient mises hors d'état de fonctionner,
- **en ce qu'**au moins une résistance (Rst) et au moins une diode (Dref1, Dref2), de préférence deux diodes (Dref1, Dref2), sont montées en série dans le sens de conduction, parallèlement aux rangées de diodes électroluminescentes (LED), où à chaque fois une prise placée entre la résistance (Rst) au moins au nombre de un et la diode (Dref1, Dref2) au moins au nombre de un est raccordée à la base de chacun des transistors (Ta, Tb, Tc), pour leur appliquer une tension de référence pilotant cette résistance.

2. Dispositif de pilotage selon la revendication 1, **caractérisé en ce que** les transistors (Ta, Tb, Tc) sont des transistors bipolaires qui sont à chaque fois connectés, directement ou indirectement, par leur émetteur ou collecteur, à l'une des diodes électroluminescentes (LED) et, par leur collecteur ou émetteur, connectés à la masse, par au moins une résistance (Ri).

3. Dispositif de pilotage selon la revendication 1 ou 2, **caractérisé en ce que** la tension de référence correspond essentiellement à la tension de conduction de la diode (Dref1, Dref2), au moins au nombre de un, ou bien à la somme des tensions de conduction des diodes (Dref1, Dref2).

4. Dispositif de pilotage selon l'une quelconque des revendications précédentes, **caractérisé en ce qu'**une diode (Dvp) servant de protection contre l'inversion de polarité est disposée dans le sens de conduction, en amont du point de bifurcation dans les différentes rangées de diodes électroluminescentes (LED), respectivement de la dérivation du circuit de pilotage produisant la tension de référence.

5. Dispositif de pilotage selon l'une quelconque des revendications précédentes, **caractérisé en ce que**, à chaque fois, une résistance individuelle (Ra, Rb, Rc) spécifique pour le transistor respectif (Ta, Tb, Tc) est disposée entre chacun des transistors (Ta, Tb, Tc) et la résistance (Ri), au moins au nombre de un, par laquelle les émetteurs ou bien les collecteurs sont connectés à la masse.

6. Dispositif de pilotage selon l'une quelconque des revendications précédentes, **caractérisé en ce que** la résistance (Rst) montée en série avec la diode (Dref1, Dref2) au moins au nombre de un, pour la production de la tension de référence, est nettement supérieure, de préférence d'un facteur de 1000, à la résistance (Ri) ou bien à la somme des résistances (Ra, Rb, Rc, Ri) qui connecte ou connectent à la masse, chacun des transistors (Ta, Tb, Tc).
